# EUROPEAN PATENT APPLICATION

(11) **EP 2 051 179 A1**
(43) Date of publication of application: **22.04.2009**
(21) Application number: 08017794.2
(22) Date of filing: 10.10.2008
(51) Int. Cl.: G06F 21/00, G06Q 10/00

(54) **Composite application using security annotations**

(30) Priority: 15.10.2007 US 872330
(71) Applicant: SAP AG, 69190 Walldorf (DE)
(72) Inventor: Karabulut, Yuecel, Milpitas CA 95035 (US); Shan, Ming-Chien, Saratoga CA 95070 (US); Spark, Murray, San Francisco CA 94131 (US)
(74) Representative: Lehmann, Judith Christina

(57) **Abstract**

Automatic secure application composition, in which a specification for a business process is accessed, the specification including a security annotation that defines a security intention, and a task that defines at least a portion of the business process, and that calls an external service. A security pattern associated with the security annotation is invoked, and a service provider associated with the external service that satisfies the security intention is identified based on the invoked security pattern. The business process is invoked using the identified service provider.

## Description

### Technical Field

The present disclosure generally relates to secured computing.

### Background

A composite application is an application that makes use of data and functions that are provided as web services by service-oriented application platforms and existing packaged and custom-built applications. Supported by their own business logic and user interfaces, composite applications combine these web services into usage-centric processes and views. In this regard, composition enables existing components to be reused by rearranging them in ever-evolving composite applications. Accordingly, composite applications enable business scenarios and/or user specific processes spanning multiple functional areas.

### Summary

A model-driven secure composition framework is provided for composite application developers that enables straightforward integration of security objectives into scripting-based, lightweight composite applications, such as by abstracting the details of an underlying security policy, objective, or infrastructure.

According to one general implementation, a computer-implemented method includes accessing a specification for a business process, the specification including a security annotation that defines a security intention, and a task that defines at least a portion of the business process, and that calls an external service. A security pattern associated with the security annotation is invoked, and a service provider associated with the external service that satisfies the security intention is identified based on the invoked security pattern. The business process is invoked using the identified service provider.

Implementations may include one or more of the following features. For example, the security annotation may be expressed using a policy domain-specific language. The security annotation may be parsed. A security policy database may be updated based on the security annotation. Invoking the business process using the identified service provider may further include generating a secure service proxy for the identified service provider based on the security intention, the secure service proxy managing a secure service calls operation to the external service, and calling the external service using the secure service proxy. The secure service proxy may be encrypted and stored. The stored secure service proxy may be retrieved, and the secure service call operation associated with the secure service proxy may be invoked. A response may be received from the external service and processed using the secure service proxy.

In further examples, identifying a service provider may further include accessing service access information for a list of service providers, the service access information including a service end point and service operation signatures, accessing a stored security objective and a stored security capability for each of the service providers in the list of service providers, and comparing the stored security objectives and the stored security capability for each of the service providers to a security objective and a security capability associated with the security intention. Identifying the service provider may also include selecting a selected service provider based on comparing the stored security objective and the stored security capability for each of the service providers, storing the selected service provider in a knowledge base as the identified service provider, and generating an event indicating that a service provider selection process has been completed based on storing the selected service provider.

In additional examples, the service may be a back-end enterprise service, an external business-to-business service, or a local service. The security annotation may include a variable representing the security intention, where the security pattern is invoked using the variable. The security intention may declare an external enforcement policy when using an external web service, may declare policies when exposing the invoked business process as a web service, may declare a task-based authorization requirement when the task requires a human interaction, and may declare task-based authorization constraints which specify an order in which the task is executed. The security intention may specify roles that are allowed to execute the task.

Moreover, in other examples the security intention may specify an order in which the task is executed. Invoking the business process may further include executing the task. The security pattern may include a first entry point used to trigger enforcement of the security intention before the service provider is identified, a second entry point used to trigger enforcement of the security intention before the task is executed, and a third entry point used to trigger enforcement of the security intention after the task is executed. Invoking the business process may further include selecting the first entry point if the service provider has not yet been identified, selecting the second entry point if the task has not yet been executed, and selecting the third entry point if the task has been executed. Identifying the service provider may include generating a service request, and security enhancing the service request based on the security pattern. The security intention may define a message confidentiality, encryption security intention, integrity intention, role assignment intention, or task execution order intention.

According to another general implementation, a computer program product is tangibly embodied in a machine-readable medium. The computer program product includes instructions that, when read by a machine, operate to cause a data processing apparatus to access a specification for a business process, the specification including a security annotation that defines a security intention, and a task that defines at least a portion of the business process, and that calls an external service. The program product also includes instructions that operate to cause the data processing apparatus to invoke a security pattern associated with the security annotation, identify a service provider associated with the external service that satisfies the security intention, based on the invoked security pattern, and invoke the business process using the identified service provider.

According to another general implementation, a device includes a storage medium and a processor. The storage medium stores a specification for a business process, the specification including a security annotation that defines a security intention, and a task that defines at least a portion of the business process, and that calls an external service. The processor is configured to invoke a security pattern associated with the security annotation, identify a service provider associated with the external service that satisfies the security intention, based on the invoked security pattern, and invoke the business process using the identified service provider.

According to another general implementation, a method includes applying a security framework to a business process, the security framework comprising a definition phase identifying security objectives of a composite application, a realization phase implementing security patterns that accomplish the identified security objectives, and a declaration phase implementing the identified security objectives using security annotations within the composite application that are based on the security patterns. The method also includes conducting an external policy negotiation to specify a common policy between the composite application and an external service based on applying the security framework, enforcing the common policy for each interaction between the composite application and the external service, and regulating access by the external service to local services and objects based on the security objectives.

Implementations may include one or more of the following features. For example, the definition phase may further include a security risk analysis component performing a security risk analysis, a security pattern definition component preparing security solutions cast as security patterns, and a security intention definition component defining security intentions realized by combining the security patterns. Performing the security risk analysis may further include analyzing threats in the business process, and identifying associated risks in the business process. Performing the security risk analysis may further include identifying service interaction mechanisms associated with the business process, and performing a thread analysis for the identified service interaction mechanisms. Preparing the security solutions further comprises providing an intention ontology enabling a unified definition of security objectives.

The realization phase may include a security pattern implementation component binding domain-independent patterns to specific contexts, thereby implementing the security patterns, and a security pattern provisioning component storing the implemented security patterns in a pattern repository. The declaration phase may further include an application-level intention declaration component declaring security intentions to be followed by the composite application, and a service-level intention declaration component defining security intentions to a local component prior to exposing the composite application as a service. The method may also include generating authorization policies and inserting missing policies into a backend policy database, using a policy update protocol. The security intentions may specify roles that are allowed to execute a task or an order in which the task is executed. The security annotations may be expressed using a policy domain-specific language. The security intentions may declare an external enforcement policy when using an external web service, may declare policies when exposing the invoked business process as a web service, may declare a task-based authorization requirement when the task requires a human interaction, and may declare task-based authorization constraints which specify an order in which the task is executed.

According to another general implementation, a computer program product, tangibly embodied in a machine readable medium, the computer program product including instructions that, when read by a machine, operate to cause a data processing apparatus to apply a security framework to a business process, the security framework including a definition phase identifying security objectives of a composite application, a realization phase implementing security patterns that accomplish the identified security objectives, and a declaration phase implementing the identified security objectives using security annotations within the composite application that are based on the security patterns. The computer program product also includes instructions that, when read by a machine, operate to cause a data processing apparatus to conduct an external policy negotiation to specify a common policy between the composite application and an external service based on applying the security framework, to enforce the common policy for each interaction between the composite application and the external service, and to regulate access by the external service to local services and objects based on the security objectives.

According to another general implementation, a system includes an enterprise configured to apply a security framework to a business process, the security framework including a definition phase identifying security objectives of a composite application, a realization phase implementing security patterns that accomplish the identified security objectives, and a declaration phase implementing the identified security objectives using security annotations within the composite application that are based on the security patterns. The enterprise is further configured to conduct an external policy negotiation to specify a common policy between the composite application and an external service based on applying the security framework, to enforce the common policy for each interaction between the composite application and the external service, and to regulate access by the external service to local services and objects based on the security objectives.

The details of one or more implementations are set forth in the accompanying drawings and the description, below. Other potential features and advantages of the disclosure will be apparent from the description and drawings, and from the claims.

### Brief Description of the Drawings

In the drawings,
Figure 1 illustrates an exemplary business process, which includes a series of tasks or activities executed in a coordinated order.
Figure 2 is a block diagram illustrating an exemplary system architecture for implementing composition applications using security annotations.
Figure 3 and 16 illustrate exemplary processes that implement a composite application using security annotations.
Figure 4 is a swim diagram depicting the preparation of the business process specification by the business process developer, at a design time.
Figure 5 is a swim diagram depicting the invocation of the business process.
Figure 6 is a block diagram illustrating categories of services that may be called by the composite application development framework.
Figure 7 and 8 depict various phases of the development of the composite application, using an enhanced framework.
Figure 9 illustrates a model that is used to specify security in the business process.
Figure 10 is a block diagram illustrating a security monitor that provides a design and execution environment for the development of the composite application.
Figure 11 is a block diagram illustrating an exemplary relationship between security services.
Figures 12 and 13 illustrate run-time enforcement for exemplary business processes.
Figure 14 illustrates the exterior appearance of an exemplary system.
Figure 15 is a block diagram illustrating the internal architecture of the device shown in Figure 14.

Like reference numbers represent corresponding components throughout.

### Detailed Description

Composite business application (or 'composite applications') are built by combining multiple components or services, such as individual web services or selected functions from within other applications or entire systems whose outputs have been packaged as web services. Composite business applications may incorporate orchestration of local application logic to control when and how composed web services interact with each other to produce newly derived functionality. Thus, the functionality of the composite application is defined from different sources within a service-oriented architecture (SOA).

Since security is one of the major concerns when developing mission critical service oriented composite applications, robust composite applications may, according to one general implementation, be created by combining multiple services in a secure manner. Following a business driven application security approach, security requirements (or 'security intentions') of a business application are expressed as security annotations at the business process specification level, and the associated security infrastructure for meeting the security requirements that correspond to the security annotations is automatically generated.

These security annotations, which express the security objectives of a business application, may be expressed in the business process specification by a security trained business process developer. The annotations may be selected from a security pattern repository and instantiated for a specific application by using a domain-specific language.

When the business process developer deploys the application, the operational processes associated with implementing the security objectives (such as service selection, service binding and security infrastructure generation) are automatically performed. For instance, the selection of a service provider may occur using a matchmaking process between security requirements and capabilities of both composite business process and service providers. The business process developer may thus declare security objectives to the run-time, without involving a dedicated security developer. In this regard, the selection of services (e.g. web services) from service providers may occur by matching the desired security objectives of the composite application with the current security capabilities of the service providers, and by matching the desired security objectives of the service providers to the current security capabilities of the composite application.

Accordingly, interdependent business processes and security policies may be designed in an abstract manner, and may be easily implemented. Since the design of the business process specification is often performed by a business analysis or software architect, the software annotations are modeled from customizable patterns that do not require the high-level security knowledge and training of a security developer, who may not be familiar with the associated business processes.

Using security annotations, the composition application need not manually bridge the gap between security objectives and configurations, thereby reducing the potential for security breaches. Furthermore, by close-coupling the business process model and associated security annotations, changes to the business process will bind more consistently with security objectives. Thus, abstract business-driven security objectives are effectively mapped into tangible security policies and security implementations, using objectives that are defined at the business process specification level.

In short, the security framework described herein enables a business process developer to add high-level security intentions or objectives to the business process specification, where the security framework facilitates the automatic generation of the security configuration and enforcement processes. These security objectives may include, for example, business process authorization requirements, web service Quality of Protection (QoP) requirements, or other security intentions.

A model-driven secure composition framework is provided for composite application developers that enables straightforward integration of security objectives into scripting-based, lightweight composite applications, such as by abstracting the details of an underlying security policy, objective, or infrastructure. The services used by the composition can be company internal business functions wrapped as web services, external web services provided by suppliers and other business partners, or purely local services, thereby providing a solution for securing cross-organizational composite applications.

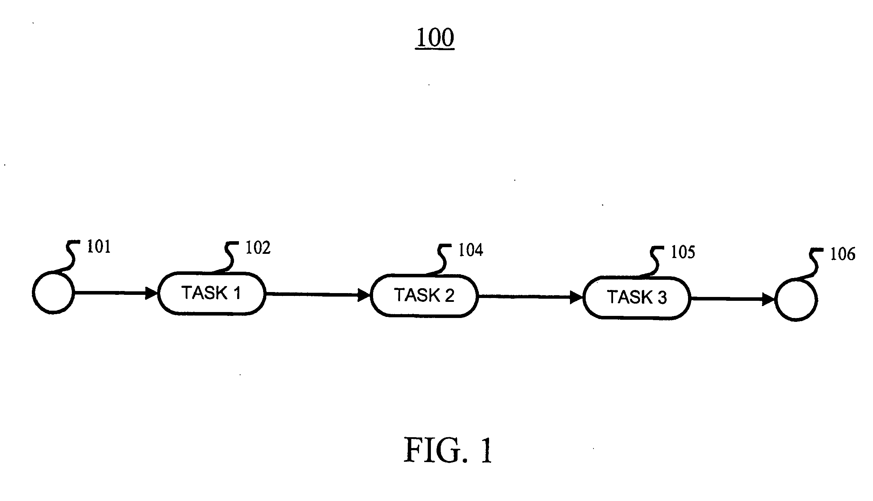

Figure 1 illustrates an exemplary business process 100, which includes a series of tasks or activities executed in a coordinated order. A task is the atomic business process component, describing an activity or altering the process's control flow, for instance splitting or joining the process flow. For instance, the exemplary business process 100 includes a dedicated begin task 101, and a sequentially executed first task 102 ("Task 1"), second task 104 ("Task 2"), and third task 105 ("Task 3"), which each occur prior to the dedicated end task 106. The execution of certain tasks, such as first task 102 or third task 105, may require the invocation of an external web service providing business functionalities of business partners or suppliers. The execution of other tasks, such as the second task 104, may require intervention by humans who are assigned specific roles.

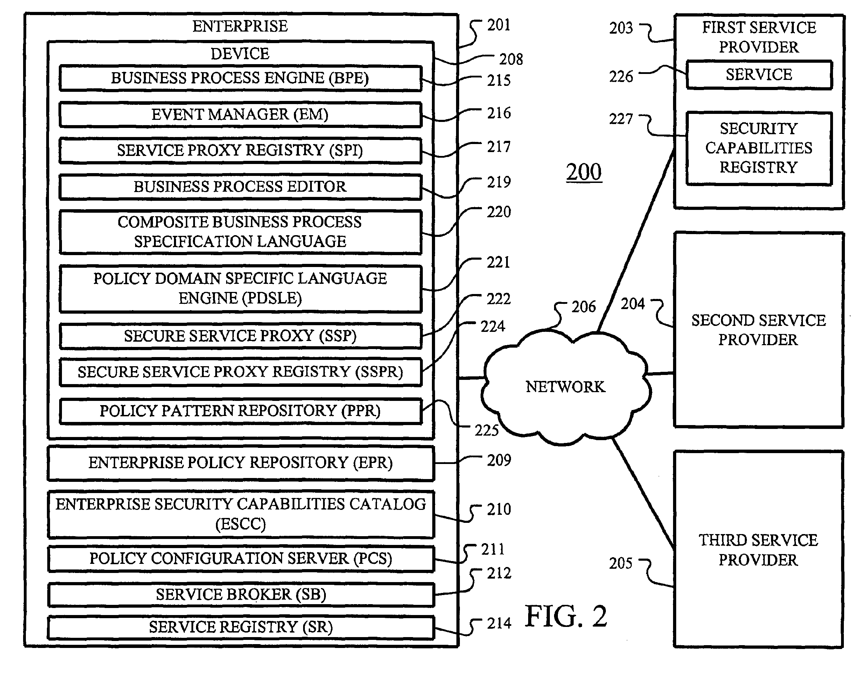

Figure 2 is a block diagram illustrating an exemplary system architecture 200 for implementing composite applications using security annotations. In particular, the system architecture 200 includes an enterprise 201 that invokes the composite application (*"comp-app"*)*,* a first service provider 203 (*"sp"*)*,* a second service provider 204, and a third service provider 205. The enterprise 201 and the service providers 203 to 205 are connected via a network 206.

The enterprise includes a device 208 that implements the composite application that uses security annotations, as well as an enterprise policy repository (EPR) 209, an enterprise security capabilities catalog (ESCC) 210, a policy configuration server (PCS) 211, a service broker (SB) 212, and a service registry (SR) 214. Generally, the enterprise policy repository 209 stores the security policies, objectives or goals *("comp-app-*sg") of the enterprise 201 for retrieval by the business process developer; the enterprise security capabilities catalog 210 stores the security capabilities (*"comp-app-cap*") of the enterprise 201 for retrieval by the business process developer; the policy configuration server 211 stores newly created security policies and capabilities of a composite business process under development; the service broker 212 identifies matching service providers; and the service registry 214 stores information regarding already-registered service providers to assist the process of identifying matching service providers.

The security policies *comp-app-sg* of the enterprise may relate to access control specification and enforcement, QoP declaration and enforcement, and distributed policy management issues that might be required at different levels including the business process level, business process task level, and service level. For instance, these policies may relate to the specification and enforcement of authorizations for individual business process tasks, the specification and enforcement of authorization constraints (e.g., separation of duties) for the business process, or the specification and enforcement of QoP requirements (i.e. security capabilities and policies) for Web services (*e.g*., local service, composite service, backend service, external service). The QoP requirements may define security or privacy requirements, such as a specific cryptographic algorithm, or technical security capabilities, such as bindings in a web services security policy (WS-SecurityPolicy), or support for a specific token like the security assertion markup language (SAML).

Furthermore, the security policies may indicate that an automated policy configuration mechanism is to be used when interacting with backend services. The business process developer should ensure that required policies are generated and stored at the backend system policy databases, if they do not include policies which authorize the service requests made by the composite application to the backend application services. The policies may further indicate that a dynamic policy negotiation and policy enforcement are to be used when interacting with external services. Certain stages of the composite application execution may access external web services that belong to suppliers or trading partners. In these circumstances, each required service interaction may happen if the security objectives of the composite application and requested external services are fulfilled or are otherwise satisfied or met.

Moreover, the security policy may indicate that dynamic policy management is to be used to address with policy changes during the operational phase, such as a change in the policy of a service being used by the composite is adapted without restarting the application.
Standards compliant security services (e.g., security token service) and policies (e.g., extensible Access Control Markup Language (XACML) compatible policy) that are to be used to support interoperability in a distributed environment may also be described in the security policy. In doing so, the security policies allow for a security APIs that provides an abstraction of low level web services security standards, for a unified usage of security mechanisms that provides enterprise level protection for all security aware applications, for a unified design of business processes and security policies, and for trust management infrastructure that supports cross-organizational service interactions.

In one example, the security policy *comp-app-*sg may require that all business-to-business (B2B) connections have be confidential. An example security capability *comp-app-cap* might indicate that the enterprise supports token-based access control using security assertion markup language (SAML) tokens.

The device 208 further includes a business process engine (BPE) 215 that creates an instance of the business process specification and executes the associated tasks of the business process as specified in the process sequence; an event manager (EM) 216 that instantiates and coordinates appropriate service proxies; a service proxy registry (SPI) 217 that stores service proxies for retrieval by the event manager 216; a business process editor 219; a composite business process specification language (BPEL) 220; a policy domain specific language (DSL) engine (PDSLE) 221 that parses security annotations; a secure service proxy (SSP) 222 that provides operations for managing secure service calls to service providers and processing security operations (e.g. encryption, token verification, token retrieval); an SSP registry (SSPR) 224 that stores SSP code; and a policy pattern repository (PPR) 225 that stores security policy patterns. Collectively, the business process engine 215, the event manager 216, and the service proxy registry 217 are referred to as design-time components, and the business process editor 218 and the composite business process specification language 220 are referred to as run-time components.

In order to implement its security-related functions, the secure service proxy 222 may include, or may have access to, an attribute server that issues certificates, a cryptographic server that provides cryptographic functions, a policy decision engine that evaluates access control requests, a certificate engine that verifies certificates, and/or a secure key engine that stores public and private keys.

The first service provider 203 includes a web service 226 and a security capabilities registry that stores security objectives or policy (*"sp-pol"*) and the security capability ("sp-cap") for the first service provider 227. The service 226 provides a business functionality, and is implemented as a web service which has a description including at least a service (or operation) name, and input and output parameters. The security policy *sp-pol* may indicate the access policies describing which credentials are required to access this service, and the security capability sp-cap may indicate the supported security capabilities of a service 226.

The composite application environment includes a composite application layer and service provider layer. Both the composite application and the service provider can act in the roles of service consumers and service providers, depending on the direction of the service calls during the run-time interactions. Although they are not depicted, the second service provider 204 and the third service provider 205 are also associated with services and security capabilities registries.

According to one implementation, composite applications are generated using a design-time process and a run-time process. In the design-time process, a developer specifies a business process using a process editor 219 and deploys the process. In the run-time process, a business process engine 215 creates an instance of the process specification and executes the tasks as specified in the process sequence. For each task that invokes an external web service invocation, the business process engine 215 calls the event manager 216, and passes the service request to the event manager 216.

Based on the request, the event manager selects appropriate service proxies from the service proxy registry, and instantiates the service proxies. Each instantiated service proxy calls the bound external web service, and returns the result of the call to the event manager, which in turn forwards the response to the business process engine. The business process engine collects responses from all external service calls and performs composition operation on the returned data to create the composite output, to thereby deploy the composite business process.

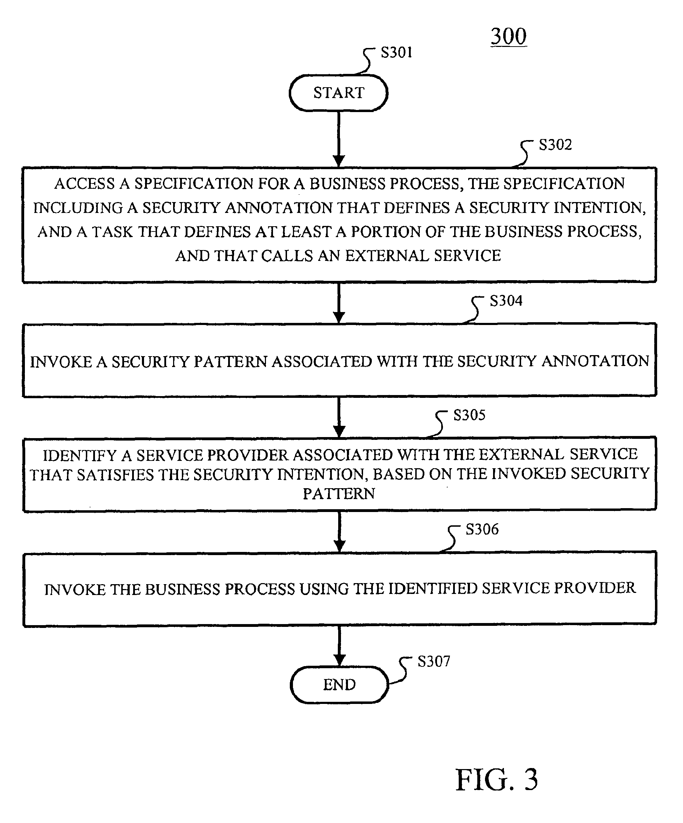

Figure 3 illustrates an exemplary process 300 that implements automatic secure application composition at the composite application layer. Briefly, the computer-implemented process 300 includes accessing a specification for a business process, the specification including a security annotation that defines a security intention, and a task that defines at least a portion of the business process, and that calls an external service. The process 300 also includes invoking a security pattern associated with the security annotation, identifying a service provider associated with the external service that satisfies the security intention on the invoked security pattern, and invoking the business process using the identified service provider.

In more detail, when the process 300 begins (S301), a specification for a business process is accessed, the specification including a security annotation that defines a security intention, and a task that defines at least a portion of the business process, and that calls an external service (S302).

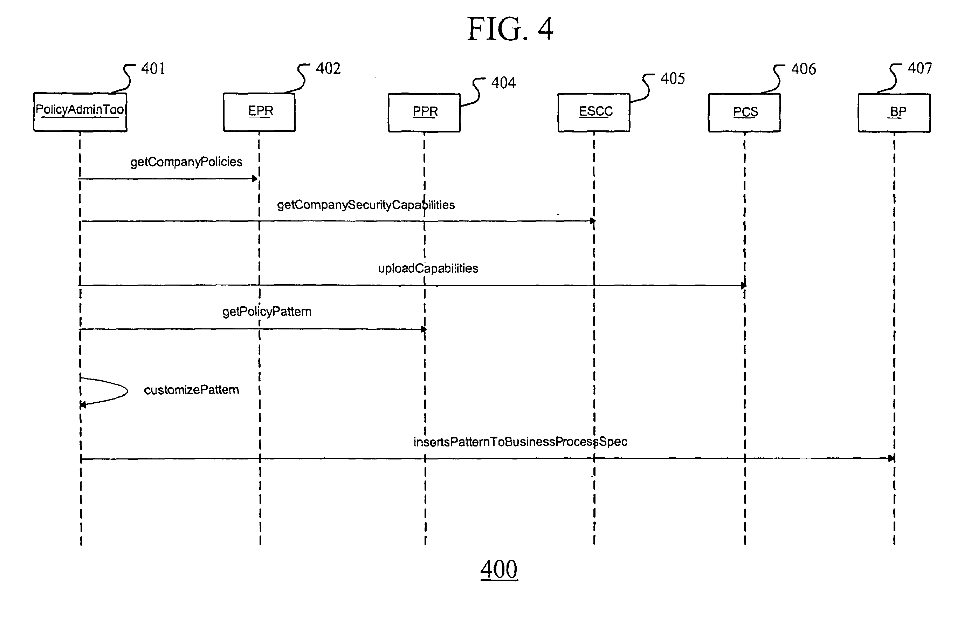

Referring ahead briefly, Figure 4 is a swim diagram depicting the preparation of the business process specification by the business process developer, at design-time. Using a policy administrative tool 401, the business process developer retrieves the security policies *comp-app-sg* of the enterprise from the enterprise policy repository 402, since the type of the composite application under design may affect the security policies that need to be enforced. The business process developer may also define application-specific security policies that are at least as rigid as the security policies of the enterprise.

Furthermore, the business process developer retrieves the security capabilities *comp-app-cap* from the enterprise security capabilities catalog 405. For each retrieved security policy, the business process developer selects an appropriate security policy pattern from the policy pattern repository 404, and customizes the selected policy pattern for the composite business process to be implemented. The customized policy pattern is inserted as a policy annotation into the business process specification 407, where annotations may be expressed using a policy domain-specific language.

The business process developer also updates the policy configuration server 406 with the security capabilities that were retrieved from the enterprise security capabilities catalog 405. Each composite application is associated with a policy configuration server that provides a service to store and look up the security policies and capabilities which are associated with a specific composite business process.

The process illustrated in the swim diagram in Figure 4 is performed at the composite application layer. Conversely, at the service provider layer web service descriptions and associated security policies and security capabilities are generated, and the services and their associated metadata (e.g. security policies and security) are registered at the service registry.

As will be described in further detail, below, the service may be a back-end enterprise service, an external business-to-business service, or a local service. The security annotation may include a variable representing the security intention, where the security pattern is invoked using the variable. The security intention may declare an external enforcement policy when using an external web service, may declare policies when exposing the invoked business process as a web service, may declare a task-based authorization requirement when the task requires a human interaction, or may declare task-based authorization constraints which specify an order in which the task is executed. The security intention may specify roles that are allowed to execute the task.

Furthermore, the security intention may specify an order in which the task is executed. Invoking the business process may further include executing the task. The security pattern may include a first entry point used to trigger enforcement of the security intention before the service provider is identified, a second entry point used to trigger enforcement of the security intention before the task is executed, and a third entry point used to trigger enforcement of the security intention after the task is executed. The security intention may define a message confidentiality, encryption security intention, integrity intention, role assignment intention, or task execution order intention.

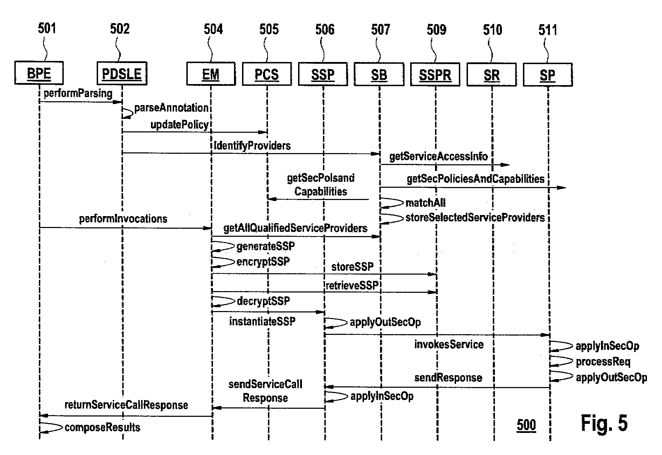

The security pattern associated with the security annotation is invoked (S304). As shown in swim diagram 500 in Figure 5, at run-time, the business process engine 501 creates an instance of the business process specification that includes the security annotations. In order to execute or invoke the security annotations, the business process engine 501 calls a policy domain specific language engine 502 that parses the security annotations.

Once parsed by the policy domain specific language engine 502, the policy configuration server 505 is updated with the created security policies *comp-app-sg* of the current composite process. In addition to these created security policies *comp-app-sg,* the policy configuration server also stores the security capabilities *comp-app-cap* of composite processes. As indicated above, at the design-time the capabilities *comp-app-cap* have been uploaded into the policy configuration server 505.

A service provider associated with the external service that satisfies the security intention is identified based on the invoked security pattern (S305). As shown in Figure 5, the policy domain specific language engine 502 triggers, calls, executes or otherwise invokes the service broker 507 for the identification of matching service providers 511, where a list of potential service providers is registered in a service registry 510.

The service broker 507 retrieves the service access information for all of the potential service providers 511 from the service registry 510. This service access information includes an address or web service end point, such as a uniform resource locator (URL) and web service operation signatures. These web service operation signatures may include the name of the operations, and input or output parameters.

In order to perform matching function, the service broker 507 invokes each of the registered, potential service providers 511 in order to retrieve their respective security policies *sp-pol* and security capabilities *sp-cap.* The service broker 507 also retrieves the security policies *comp-app-sg* and security capabilities *comp-app-cap* of the composite application from the policy configuration server 505.

Upon retrieving the security policies and capabilities of the composite application and the service providers, the service broker 507 performs at least two tests. For instance, the service broker may determine whether the service providers 511 offer a security capability sp-cap that meets or otherwise satisfies the security policies *comp-app-sg* of the composite application. Furthermore, the service broker 507 determines whether the composite application provides security capabilities *comp-app-cap* that match or otherwise satisfy the security policies *sp-pol* of service providers 511.

If both tests are satisfied, then the service provider 511 can be used for the secure composite application, since both the service provider 511 and the composite application are mutually qualified to communication securely. After performing these tests for each registered, potential service provider 511, the service broker 507 stores a set of identified, qualified service providers 511 in a knowledge base and generates an event that indicates that provider selection has been completed, and that the service providers have been appropriately filtered.

The business process is invoked using the identified service provider (S306), thereby ending the process 300 (S307). After parsing the security annotations and identifying service providers, the business process engine 501 executing or otherwise invokes the tasks included in the business process, where at least one task invokes an external web service using secure service proxies. Calls to internal and external services are managed by the event manager 504, which is triggered by the business process engine 501.

For each external web service call, the event manager 504 retrieves the list of all identified, qualified service providers from the service broker 507, and accesses any information that may be useful to establish a secure communication between the composite application and each identified service provider 511. This information may include web service access information, such as end point information, security policies *comp-app-sg* and capabilities *comp-app-cap* of the composite application, security policies *sp-pol* and capabilities *sp-cap* of the service providers, a list of identified, qualified service providers and references to the appropriate security implementations that are stored in the pattern implementation catalog.

The event manager 504 then generates an implementation of a secure service proxy 506 for each service provider 511 to be invoked. In order to protect the implementation of the secure service proxy 506 from internal attacks (e.g. code modification), the event manager 504 encrypts the secure service proxy 506 code, and the secure service proxy 506 code in the secure service proxy registry 509. The secure service proxy 506 is a type of service proxy that provides operations for managing secure service calls to the service providers 511 and for processing security operations, such as encryption, token verification, or token retrieval.

For each secure service access, the event manager 504 retrieves the encrypted secure service proxy 506 code from the secure service proxy registry 509 and, after decrypting the code, instantiates the secure service proxy 506. The event manager 504 invokes the service operations provided by the secure service proxy 506, which applies the security operation (e.g. by attaching a security token to the request or encrypting the request), and calls the external web service operation.

Each web service of the identified service providers 511 receives the call, performs the associated security operations (e.g. by verifying the token or performing decryption), and processes the incoming message requests. The service provider 511 then generates a response to the secure service proxy 506, applies an appropriate security operation to the response, (*e*.*g*. by signing the response), and transmits the secured response to the secure service proxy 506.

The secure service proxy 506 receives the secured results, applies associated security operations to the response (e.g. by verifying a signature), and returns the processed response to the event manager 504. In turn, the event manager 504 forwards the results to the business process engine 501, which provides the processed response to the business process.

The following is an example of the invocation of a business process using an identified service provider, in the context of the shipping business. In this straightforward example, the composite application, referred to as *ICARRIER,* uses a business logic that selects qualified carriers for transporting automobiles from an auto manufacturer to a new car dealership.

An exemplary process specification, defined by using a domain specific language for *ICARRIER* applications, is shown in Table 1, below.

### Table 1

| iCarrier Process | |
|---|---|
| | task :get_carrier_list do {...} /* requests service provider filtering */ |
| | task :rate_request do {...} /* requests external service invocation */ |
| | task :select_carrier do {...} |
| | task :book_carrier do {...} /* requests external service invocation */ |
| End Process | |

In the exemplary business process specification, the execution of the task :GET_CARRIER_LIST () returns a list of qualified carriers in terms of security policies and capabilities. The composite application defined by the business process includes at least two interactions to the carriers: GETRATE (SHIPMENT_DATA), which retrieves the rates from different carriers; and BOOKCARRIER (SHIPMENTID) which books a carrier for a shipment. The carriers provide their functionality as web services, and the selection of the appropriate carriers to use depends also whether *ICARRIER* and the potential carriers satisfy each others security policies and security capabilities.

The security policies and security capabilities of three potential carriers is shown below in Table 2.

**Table 2**

| Service | Policy/Capability | Value |
|---|---|---|
| *ICARRIER* | Security Policy | message-confidentiality |
| | Security Capability | Rivest-Shamir-Adleman (RSA) Encryption and Decryption, |
| | Security Capability | X509 Certificates |
| A-Trans | Security Policy | message-confidentiality |
| | Security Policy | service-confidentiality:: certificate-based-access-control |
| | Security Capability | (RSA) Encryption and Decryption |
| | Security Capability | X509 Certificates |
| B-Trans | Security Policy | message-integrity |
| | Security Capability | RSA Encryption Decryption |
| | Security Capability | SHA1Digest |
| | Security Capability | Base 64 Encoding |
| | Security Capability | Simple Public Key Infrastructure (SPKI) Certificates |
| C-Trans | Security Policy | noB2Bsecurity |
| | Security Capability | *<none>* |

In this example, the *ICARRIER* web services provide operations to retrieve these policies and capabilities, such as by using LOOKUP_MYPOLICIES() or LOOKUP_MYCAPABILITIES() services operations.

It is assumed that the auto manufacturer's security policy indicates that all B2B connections for existing applications should ensure confidentiality. To meet this policy, *ICARRIER* should only select carriers that provide a security capability that ensures confidentiality. At the same time, however, *ICARRIER* should have a security capability that satisfies the security policies of the carriers (i.e. the service providers).

In preparing the business process specification, the *ICARRIER* business process developer retrieves the following 'B2Bconfidentiality' security pattern, which indicates that all B2B connections ensure confidentiality:

### PATTERN: ENFORCE "B2BCONFIDENTIALITY" DURING PROCESS <PROCESS_NAME>

Like other security patterns, this pattern is used as a template that is instantiated for each specific process. Customizing this pattern, the business process developer inserts the following annotation into the *ICARRIER* business process specification shown in Table 1, using a policy domain specific language:

### ENFORCE "B2BCONFIDENTIALITY" DURING PROCESS ICARRIER

The annotated process specification, which includes a combination of a process domain specific language and policy domain specific language, is shown in Table 3, below:

**Table 3**

| iCarrier Process |
|---|
| task :get_carrier_list do {...} |
| task :rate_request do {...} |
| task :select_carrier do {...} |
| task :book_carrier do {...} |
| End Process |
| iCarrier Annotations |
| enforce "B2Bconfidentiality" during Process iCarrier |
| End Annotations |

Using this business process specification, the secured *ICARRIER* would only select A-Trans as a qualified carrier. In particular, A-Trans satisfies *ICARRIER'S* "message-confidentiality" security policy, since A-Trans provides the RSA Encryption and Decryption capability (which is used to realize a secure channel communication), and since the RSA Encryption and Decryption capability is also supported by *ICARRIER* itself (as reflected in *ICARRIER*'s security capability list). Furthermore, *ICARRIER* satisfies A-Trans's "message-confidentiality" security policy, since *ICARRIER* provides the RSA Encryption and Decryption capability (which is used to realize a secure channel communication), and since the RSA Encryption and Decryption capability is also supported by A-Trans (as reflected in A-Trans's security capability list).

Moreover, *ICARRIER* also satisfies A-Trans's "service-confidentiality::certificate-based-access-control" security policy, since *ICARRIER* provides the X509 Certificates security capability (which is required to take access control decisions based on certificate-encoded attributes such as membership roles), and since the same X509 Certificate security capability or processing functionality is also supported by A-Trans (as reflected in A-Trans's security capability list). Based on this match, *ICARRIER* would automatically create security proxies that ensure that the required security functionalities are implemented at run-time. For example, the service calls GETRATE and BOOKCARRIER are implemented securely. Carriers B-Trans and C-Trans do not meet *ICARRIER*'s security policies, and are thus not identified as qualified carriers.

If the auto manufacturer alters its own B2B connections security policy, the business process developer can easily change the security annotation in the *ICARRIER* business process specification, and re-deploy the composite application to reflect the new security policy. For example, if a new security policy indicates that B2B connections do not need to ensure confidential connections, the business process developer can replace the old annotation "B2Bconfidentiality" with "noB2Bsecurity" using a process editor, and eliminate the security capability requirement. This altered business process specification is shown below in Table 4.

**Table 4**

| iCarrier Process |
|---|
| task :get_carrier_list do {...} |
| task :rate_request do {...} |
| task :select_carrier do {...} |
| task :book_carrier do {...} |
| End Process |
| iCarrier Annotations |
| enforce "noB2Bsecurity" during Process iCarrier |
| End Annotations |

The updated security policy and capability list would also be adjusted, as shown in Table 5.

**Table 5**

| Service | Policy/Capability | Value |
|---|---|---|
| *ICARRIER* | Security Policy | no B2B security |
| | Security Capability | *<none>* |
| A-Trans | Security Policy | message-confidentiality |
| | Security Policy | service-confidentiality:: certificate-based-access-control |
| | Security Capability | (RSA) Encryption and Decryption |
| | Security Capability | X509 Certificates |
| B-Trans | Security Policy | message-integrity |
| | Security Capability | RSA Encryption Decryption |
| | Security Capability | SHA1Digest |
| | Security Capability | Base 64 Encoding |
| | Security Capability | Simple Public Key Infrastructure (SPKI) Certificates |
| C-Trans | Security Policy | noB2Bsecurity |
| | Security Capability | <*none*> |

Under this altered security scheme, the only carrier would be identified as a qualified carrier would be C-Trans. In this regard, this process is automatically controlled by using domain specific security annotations to generate protected security proxies that perform the desired security operations in order to meet the high-level security intentions expressed in the annotations.

Next, a specific exemplary implementation of the secure service proxy is described. One primary task of the secure service proxy is to handle security related tasks that are performed to satisfy the security policies associated with the security annotations included in the business process specification. As such, the process performed by a generated secure service proxy to implement the "B2B confidentiality" security policy is described in further detail below.

In this example, the security policies and capabilities associated with *ICARRIER* and A-Trans are those of the 'unaltered' state, as reflected in Table 2. Thus, the secure service proxy is used to perform tasks in order to satisfy the specified security policies.

With regard to the communication from *ICARRIER* to A-Trans, the secure service proxy receives a certificate for *ICARRIER* from an attribute server, where the certificate encodes an attribute of *ICARRIER* that is used to prove *ICARRIER'S* eligibility, such as a GOLDDHLPARTNER certificate. The secure service proxy also retrieves the public key for A-Trans from the public key store of *ICARRIER,* and accesses the A-Trans web service handle. The private key for *ICARRIER* is loaded from the private key store of *ICARRIER,* and the shipment request for A-Trans is encrypted. The encrypted shipment request and *ICARRIER* certificate are sent by invoking the web service operation provided by the A-Trans web service.

From the perspective of A-Trans, the A-Trans web service verifies the submitted certificate, and makes an access control decision based on the *ICARRIER* attribute encoded in the certificate. Where access is granted, A-Trans decrypts and processes the submitted request, and encrypts a result using the public key extracted from the certificate. The encrypted result is sent to the secure service proxy which in turn decrypts the results using *ICARRIER*'s private key. Thus, A-Trans fulfils *ICARRrER*'s message confidentiality policy by encrypting the result prior to transmission to *ICARRIER.*

This result is enforced by *ICARRIER*'s secure service proxy, which checks to determine whether the results are in fact encrypted. Message-confidentiality is thus satisfied, because the shipment request and corresponding result are encrypted. Furthermore, the service confidentiality is a certificate-based-access-control policy, since the *ICARRIER* certificate is sent by invoking the web service operation provided by the A-Trans web service.

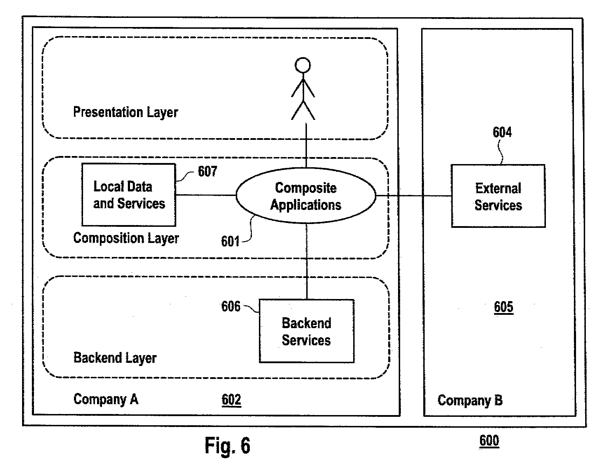

Figure 6 is a block diagram illustrating categories of services that may be called by the composite application development framework 600. As described above, for example, the tasks invoked by the composite application 601 of a first company 602 may call external web services 604 of a second company 605. Furthermore, the composite application may call backend services 606 from backend enterprise applications (e.g., enterprise resource planning applications), or even local services 607 that are built into the composite application as local components.

The local services 607 are used because in many cases the business process developer may implement some business logic that is not fully captured by one or more existing services. The local services may be created by composite application developer, or imported from other component providers. These local services 607 may be exposed as a web service for access by other composite applications.

The enhanced framework 600 aids the development of composite applications by defining certain development tasks, to efficiently specify the security of a composite application. The framework 600 also defines design-time protocols regarding which information and security artifacts the different participants exchange with the other parties that are involved in the development process. Defining the dependencies between development tasks helps organize the design process.

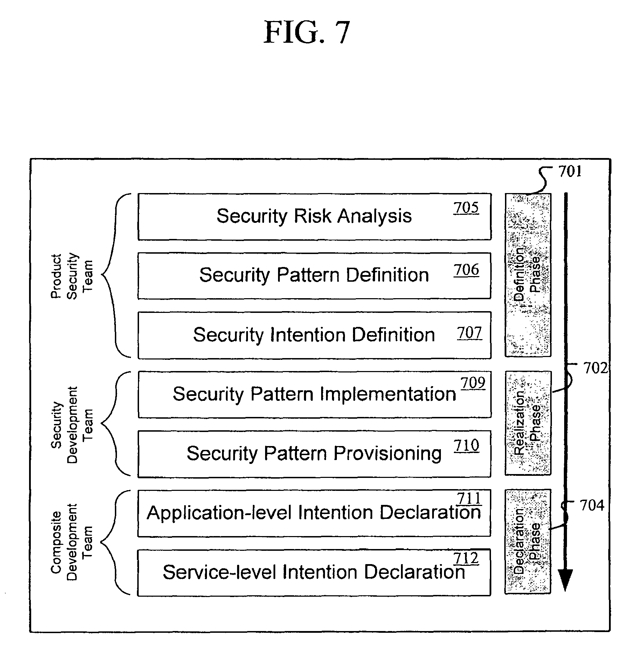

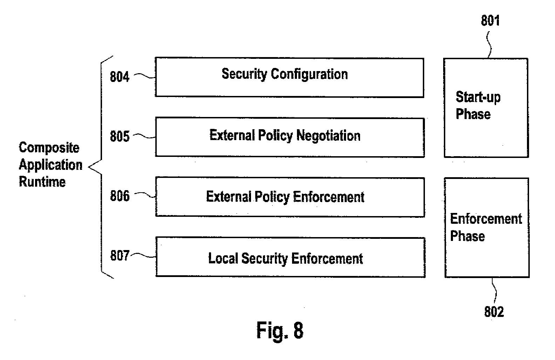

Figures 7 and 8 depict the various phases of the development of the composite application, using the enhanced framework 600. In Figure 7, for example, the overall process used to model security includes a definition phase 701 in which security objectives are identified, a realization phase 702 in which mechanisms are provided to accomplish identified security objectives, and a declaration phase 704 in which security objectives for the composite application, or services are selected using attached annotations.

In the definition phase 701, a security team performs a security risk analysis 705 to analyze threats and identify associated risks in business scenarios and related business processes. Such a systematic analysis can be done by identifying service interaction mechanisms in a service-oriented business application, and by performing threat analysis for individual service interaction mechanisms.

In order to mitigate risks, the product security team prepares a security pattern definition 706 to propose security solutions that can be cast in security patterns. Through definition of security patterns, solutions are made re-usable between different composite applications. In doing so, a unified usage of security mechanisms across other applications which need to be secured can be prepared.

Also in the definition phase 701, the product security team prepares a security intention definition 707 to define a set of high-level security intentions that can be realized with a combination of security patterns. The security intention definition 707 provides an intention ontology which aims to enable a unified definition of security objectives across other teams in the application development life-cycle.

In the realization phase 702, the security developer provides a security pattern implementation 709, binding domain-independent patterns to a specific context. When re-using domain-independent patterns, the security development team follows company-specific rules to adapt different implementations. In providing security pattern provisioning 710, the implemented patterns are made available through a pattern repository.

In the declaration phase 704, the composite application developers prepare an application-level intention declaration 711 to declare security intentions that should be followed by the composite application. The application-level intention declaration 711 is used to capture the security intentions of the composite application, and defines the intentions applied by the composite application in order to make interactions with the constituent parts (e.g., local components, process tasks, external web services) of the composite application secure.

By performing a service-level intention declaration 712, composite development team may expose the composite application or a local component as a service. Thus, QoP requirements may be defined by adding security intentions to the composite application and local component prior to exposure.

In Figure 8, the overall process used to ensure safe execution of composite applications includes a start-up phase 801, and an enforcement phase 802. Protocols used in the start-up phase 801 ensure the basis for the protocols used in the enforcement phase 802.

In the start-up phase 801, a security configuration 804 occurs before executing the composite application. For instance, the assigned application-level security intentions are loaded and are internally configured for run-time enforcement. When interacting with backend services, the corresponding security configuration is set up, such that sufficient authorization permissions are in place prior to execution of the services on the backend. A policy update protocol is thus used to generate authorization policies and to insert missing policies into the backend policy database. When interacting with external services, trust can be established by exchanging authentication and authorization attributes.

External policy negotiation 805 occurs when composite applications use external services, such as services associated with different security domains. A composite application (*e*.*g*., as service consumer) and an external service (e.g., as service provider) may define their individual security policies and security capabilities, such as with respect to token types, cryptographic algorithms and mechanisms used. Before engaging an interaction, both the composite application and the external service arrive at an agreement that specifies a common policy. This arrived-at agreement is effectuated by a policy negotiation process that supports the merging of policies from various sources.

In the enforcement phase 802, external policy enforcement 806 addresses enforcing the common policy for each interaction between both parties. External policy enforcement 807 may require that exchanged messages be modified, for example by adding a security token to the message. For local security enforcement 807, the enhanced framework provides an access control mechanism to regulate access to local services and objects. In doing so, a family of domain-specific languages is provided that supports the efficient specification of application security policies and that also supports run-time components that are used for the enforcement and management of these policies.

As indicated above, security policies specified by attaching intentions to the business process specification. The business scripting language is designed to efficiently define the functional parts of composite applications, to define a process that includes several tasks that may, in turn, include activities. Tasks may use local services, store local data in variables, and invoke external Web services or backend systems.

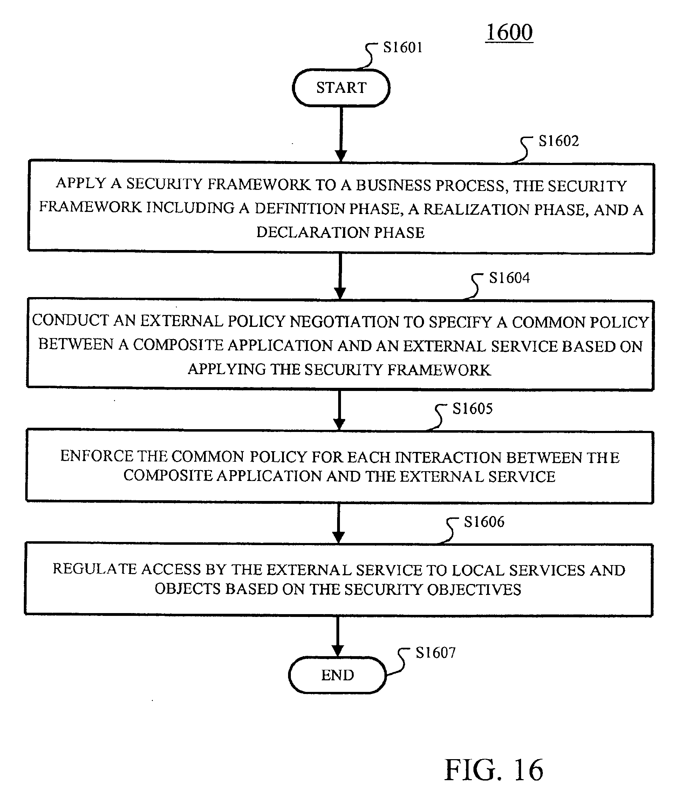

Referring ahead briefly, Figure 16 illustrates another process 1600 that implements automatic secure application composition. Briefly, when process 1600 begins (S1601), a security framework is applied to a business process, the security framework comprising a definition phase identifying security objectives of a composite application, a realization phase implementing security patterns that accomplish the identified security objectives, and a declaration phase implementing the identified security objectives using security annotations within the composite application that are based on the security patterns (S1602). An external policy negotiation is conducted to specify a common policy between the composite application and an external service based on applying the security framework (S1604). The common policy is enforced for each interaction between the composite application and the external service (S1605). Access by the external service to local services and objects is regulated based on the security objectives (S1606), thereby ending process 1600 (S1606).

Table 6, below, provides another example business process specification, which illustrates a streamlined process for selecting and booking a qualified carrier (such as a car carrier) from a set of potential carriers. For ease of reference, each line of the business process specification has been numbered.

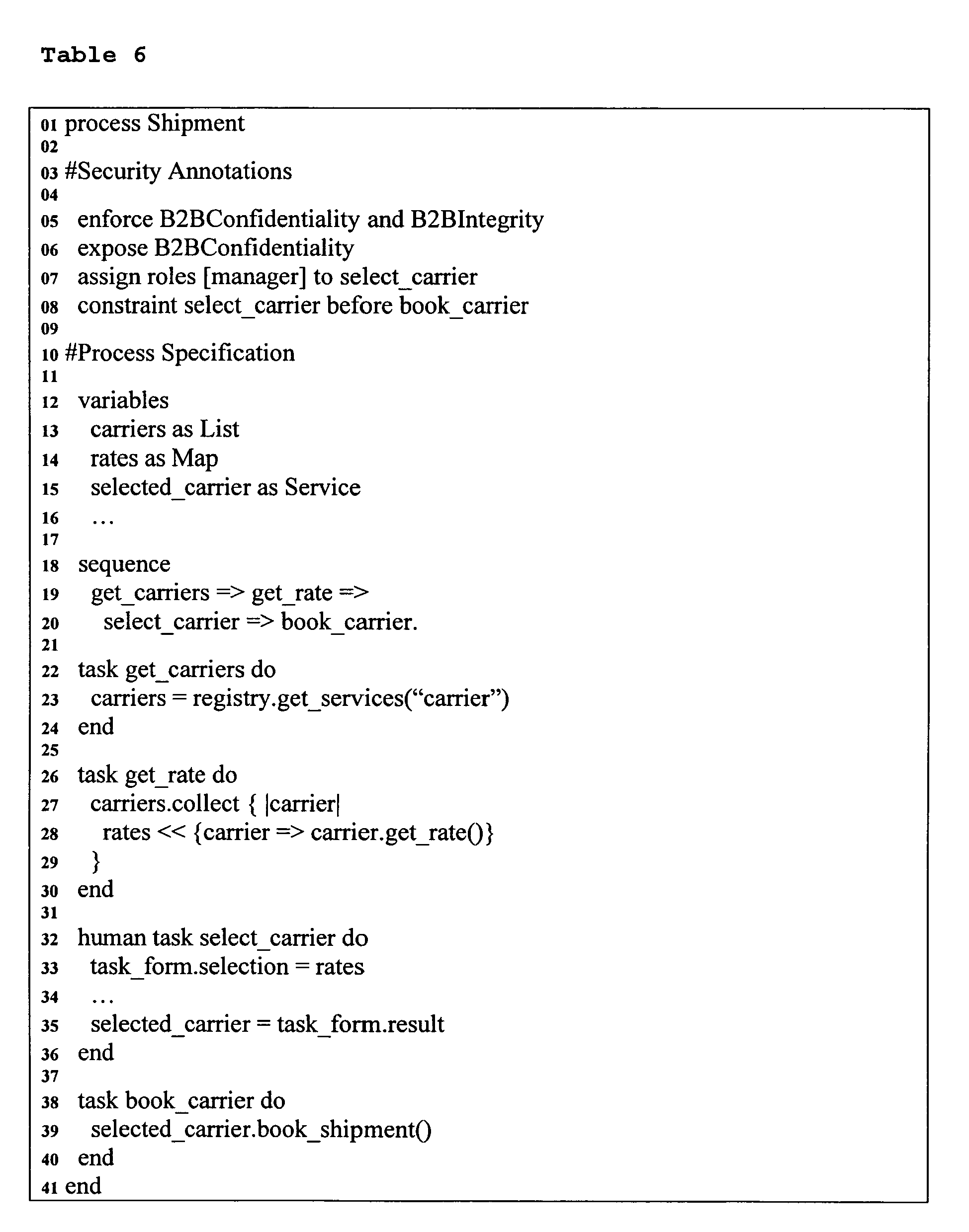

The selection process occurs based on the rates sent by the carriers for a given shipment request, and includes four tasks that pare performed in sequence (11. 18 to 20). The GET_CARRIERS task selects a set of carriers from the carrier registry after checking their qualifications based on the shipment request details. The GET_RATE task generates a request for quote (RFQ) for each carrier, which causes each carrier to evaluate the RFQ and respond with an offer. The HUMAN_TASK task implements the functionality to perform a manual selection of a carrier by a human user. Additionally, the BOOK_CARRIER task performs the booking of a selected carrier.

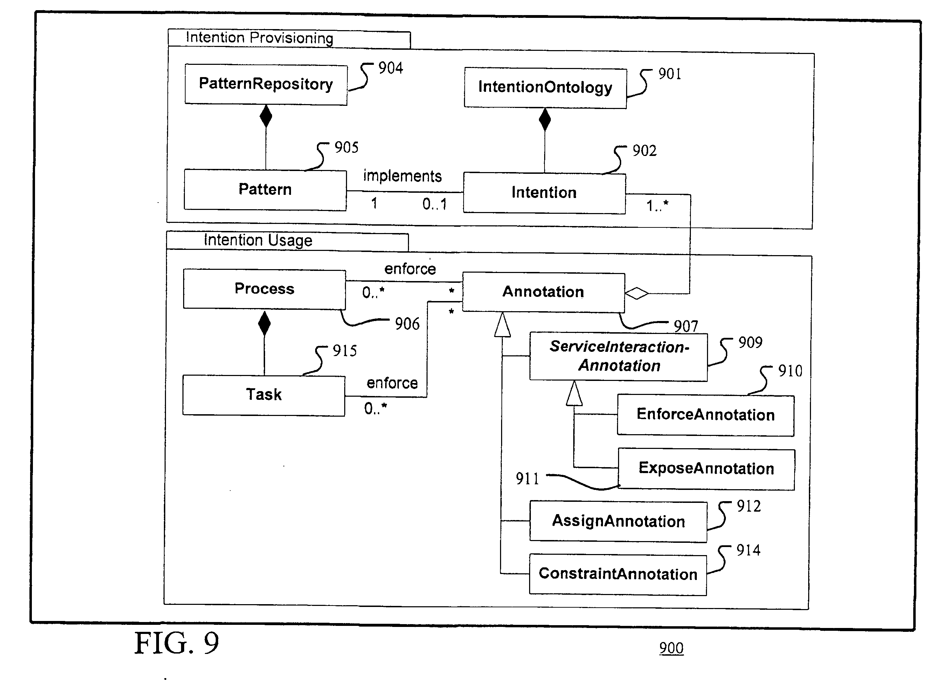

Security objectives are expressed in the business process specification, in the form of security intentions. For instance, Figure 9 illustrates a model 900 that is used to specify security in the business process. The definition phase defines an intention ontology 901 of named security intentions (such as security intention 902), and the realization phase realizes a pattern repository 904 of patterns (such as pattern 905). Security intention 902 is associated with the pattern 905, since the pattern 905 implements the security intention 902.

Security intentions are implemented by including security annotations in the business process specification. For instance, a process 906 may declare a composed set of security intentions to be enforced by using a security annotation 907 attached to the business process specification. Three example security annotations include a Service Interaction security annotation 909 (such as an Enforce security annotation 910 or an Expose security annotation 911), an Assign security annotation 912, or a Constraint security annotation 914.

A Service Interaction annotation 909 is used to declare the external enforcement security policies, when using web services, for example when messages are sent out they should be encrypted. The Enforce annotation 910 *(enforce* <service usage intention expression>) statement declares a policy for interactions with web services that are used by the composite application. For example on line 5 of Table 6, B2BConfidentiality and B2BIntegrity are enforced, forcing simple object access protocol (SOAP) messages to be encrypted and signed. Therefore, when executing task 915 (which may be the GET_RATE or BOOK_CARRIER tasks that calls web services), the SOAP messages will be encrypted and signed prior to transmission.

An Expose security annotation 911 (*expose* <service usage intention expression>) statement declares security policies to be used when exposing the composite application or a local component as a web service. For example, on line 6 of Table 6, the composite application is exposed as a web service that requires encrypted communication with any service consumer that invokes the exposed service.

An Assign security annotation 912 (*assign* <role assignment intention expression>) statement specifies which roles are allowed to execute the given tasks. For example, on line 7 of Table 6, the business process developer declares the intention that the task SELECT_CARRIER is to be executed by users that possess the role of "manager".

A Constraint security annotation 914 (constraint <execution order intention expression>) specifies an order or sequence in which tasks are performed or executed. For example, on line 8 of Table 6, the task BOOK_CARRIER is to be executed after task SELECT_CARRIER is completed, that is, after the manager has selected a carrier. Additional constraint types, such as separation of duty, binding of duty, role seniority, or others can be added or substituted.

The enhanced framework described herein follows pattern-oriented approach to implementing security policies, since security intentions (or security objectives) are associated with, and are implemented by, defined patterns. By this, security intentions may be implemented by a pattern associated with a security annotation that describes the security intention. When executing the composite application, a container finds the corresponding pattern for a particular security intention, and follows the pattern implementation to secure the application. Table 7, below, shows an excerpt of a security pattern.

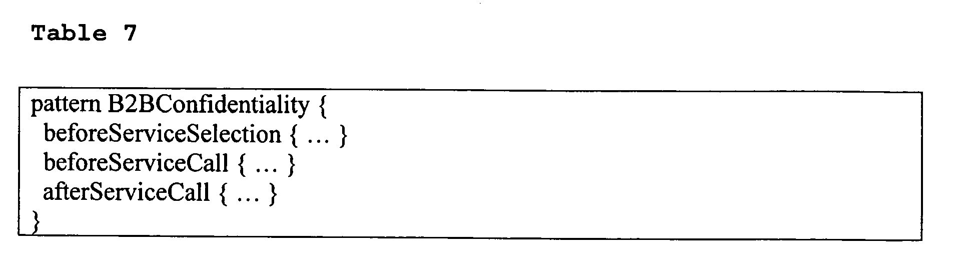

Generally, security patterns are used to provide the technical details for the enforcement of an intention, for example how a certain security concern must be enforced. These patterns may be provided as a generic security component written by the container provider or by some other party as part of a pattern library or repository, which may be delivered with an application infrastructure. If application-specific security intentions are not already defined, prefabricated pattern implementations can be extended or abstracted. By using a domain specific language for security patterns, the pattern implementations are modular and effective. Enforcement code within patterns may also be written in a scripting language.

In the excerpted pattern shown in Table 6, the pattern can be viewed as a module that has several entry points through which the pattern can be invoked to enforce security. The different types of entry points may be used to trigger a particular portion of enforcement implemented by the pattern. For example, BEFORESERVICESELECTION is the entry point at which specified code is executed before the service registry is requested.

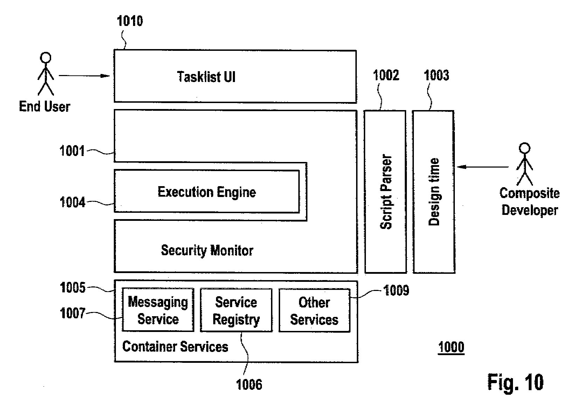

Figure 10 is a block diagram illustrating a security monitor 1001 that provides a design and execution environment for the development of the composite application. Security policy enforcement is carried out using the security monitor 1001, which is integrated into a composite application container 1000. The container provides an integrated design time 1003 to develop composite applications in a business scripting language.

A business process specification (or "script" or "description") is saved, and is parsed by a script parser 1002 to place the business process specification in a format that is capable of being executed by an execution engine 1004. During execution, the underlying business process uses container services 1005, which may include a service registry 1006, and messaging service 1007, or other services 1009. When executing human tasks, control is passed to the tasklist user interface (UI) 1010, through which manual tasks can be completed.

The script parser 1002 is extended to support the declaration of security intentions in the business process specification. Components of the container 1000 allow the security monitor 1000 to observe the execution of business processes, and to interfere or otherwise interact when appropriate.

The security monitor 1001 may inspect and change the state and/or behaviors of other container components, such as the script parser 1002 or the messaging service 1007. Behaviors are observed by accessing events that are produced by the components. States are monitored via the context of an event. Thus, the security monitor 1001 may access the business process specification and the security annotations in order to determine what types of security are to be enforced. Similarly, the security monitor 1001 accesses the pattern repository in order to determine how the intentions expressed in the security annotations are to be enforced.

The security monitor 1001 observes the execution of the business process through hooks that have been introduced in the execution engine 1004. As such, the security monitor 1001 follows the concept of total mediation, in that all security-relevant events in the execution of the business process are intercepted by the security monitor 1001. Before the event actually happens, the monitor invokes selected patterns, which have the opportunity to check and update the actual state or alter the effect of the intercepted event, in order to enforce security. To accomplish this effectively, the execution engine 1004 is made aware of the activities that produce events. Furthermore, the security monitor 1001 should have access to the set of security intentions used for that particular business process.

Each task of an executed business process produces one or more security-relevant events of a certain type. While executing a task, the execution engine 1007 generates run-time events, the type of which corresponds to what is currently occurring with the task. Before the generated event becomes effective, it is deferred and delivered to the security monitor 1001, which then may execute a run-time protocol (see Figure 8), and also may invoke selected patterns at the entry point which correspond to the event type.

The event types may include a process model change event, a service selection event, a before service call event, an after service call event, a human task execution event, or another event. The process model change event is generated at the integrated design time when a business process specification or its security intention is altered and saved. In systems that do not have an integrated design time, an analog event may be generated at deployment time. The container 1000 executes the security configuration protocol. In case of this event, there is no relating pattern entry point type to be invoked.

The service selection event is generated when a task uses the service registry 1006 to select services of a certain category. This event causes the filtering of service providers based on the selected security policies. For example, the container 1000 triggers the BEFORESERVICESELECTION entry points to generate a composed policy for the composite application, which then is used for the service selection. The container 1000 also retrieves a list of available service providers for the selected category, and uses the policy negotiation protocol for each service providers in the list. If no agreed policy can be found for a service provider, the service provider is removed from the list of available service providers. The filtered list of identified, qualified service providers is returned to the business process.

When a call to a service provider occurs, an event is generated, and a context is set up which includes the message to be sent. The container triggers the BEFORESERVICECALL entry points in the pattern, which may alter the message content before it is sent out by the container 1000. Similarly, when a service provider returns a message, an event is generated and a context is set up which includes the received message. The container triggers the AFTERSERVICECALL entry points in the pattern in order to transform the message, before data included in the message is further used in the business process.

Before a human task is executed, the human task execution event is generated. The security monitor 1001 determines whether the user has sufficient permission to execute the task. Because enforcement occurs when an event is triggered, enforcement may be limited by what kinds of events are captured by the security monitor. Thus, the security monitor 1001 can easily be customized or extended to address new types of events.

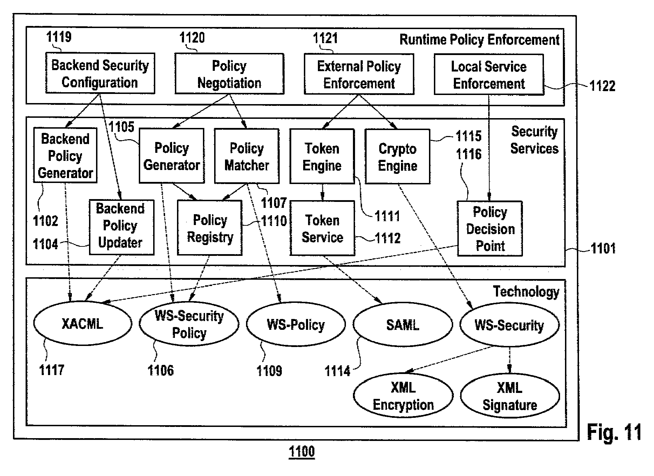

Figure 11 is a block diagram illustrating an exemplary relationship between security services. In a composite application environment, each service may act as a consumer service and a provider service. In order to able to address different security requirements, each service uses a set of security services 1101, each of which providing a well-defined security functionality.

In Figure 11, a backend policy generator 1102 is used to generate authorization policies which are used by backend policy enforcement. A backend policy updater 1104 is used to check whether a particular policy exists in a backend policy database and, if appropriate, is used to insert the policy. A policy generator 1105 is used to generate WS-Security Policy policies 1106 from Service Interaction security annotations. A policy matcher 1107 matches compatible assertions between two WS-Security policies, resulting in an agreed policy 1109, and a policy registry 1110 is used to store and retrieve policies for external service interactions.

A token engine 1111 is used to embed tokens into a SOAP message, and is further used to provide token signature verification functionality. A security token service 1112 is used to generate a SAML token 1114. A cryptographic engine 1115 provides functionality for encrypting and decrypting, as well as signing and verifying SOAP messages, and a policy decision point 1116 is used to enforce access control policies 1117 encoded in XACML.

When a process model change event occurs, the backend security policies and local policies are updated based on the authorization requirements of the business process specification. Specifically, the authorization security intentions are extracted from the business process specification, and are passed to the backend policy generator 1102, which generates corresponding XACML policies 1117. The backend systems provide a separate "authorization policy updater" web service interface for managing its authorization configuration.

The backend policy generator 1102 passes the generated XACML policy 1117 to the backend policy updater 1107, which is provided by a backend system as a separate authorization policy updater web service. The backend policy updater 1104 embeds the policy 1117 into an XACML request, which is then sent to the backend policy decision point 1116. The policy decision point 1116 returns either an XACML PERMIT response or a DENY response, depending on whether the received policy 1117 exists. If the policy does not exist, then it is inserted into the policy database by the backend policy updater 1104. In one example implementation, the backend policy updater 1104 is implemented using the JAVA^{®} programming language, and the policy decision point 1116 is implemented using the SUN XACML markup language.

The local policy update process is similar to backend security policy update process, except that policies are updated in a local policy database. These local policies may be used to enforce authorization at the user interface level.

The portion of the security monitor that processes security event handling is included in different components of the container. For instance, the design time recognizes and handles the process model change events and triggers the backend security configuration 1119. The service registry handles the service selection events, and triggers the policy negotiation 1120. The messaging service handles before service call events when sending SOAP messages, and handles after service call events when receiving results. The service call events are handled by triggering external policy enforcement 1121. When local services and data are accessed, and also when the user interface processes a human task execution event, local service enforcement 1122 is triggered.

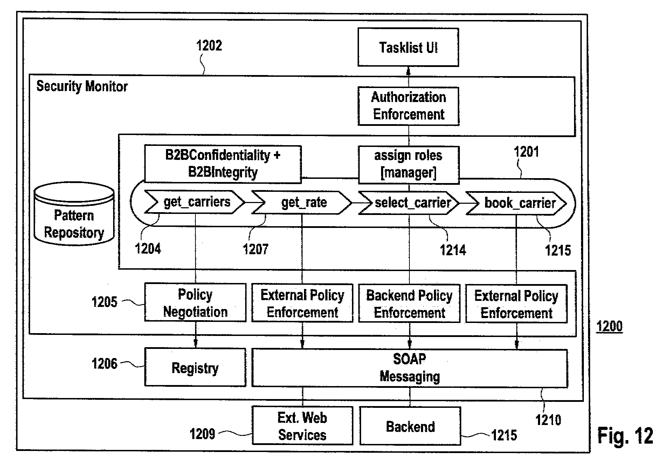

Figure 12 illustrates run-time enforcement for the exemplary business process shown in Table 6, which includes the Service Interaction security annotation "enforce B2BConfidentiality and B2BIntegrity," and the Assign security annotation "assign roles [manager] to select_carrier." The former security annotation indicates that B2B web service interactions should be secured by encrypting and digitally signing exchanged SOAP messages. The latter annotation expresses that only users acting in the role of "manager" are allowed to select a carrier.

In order to enforce these security annotations, the execution engine 1201 triggers events while executing each task of the business process. The triggered events are reported to the security monitor 1202, which then addresses the appropriate security enforcement activities.

From the security enforcement perspective, the execution of the GET_CARRIERS task 1204 includes the selection of carriers, for which there is a mutual agreement between the shipment process and carrier services. This means that the security intentions "B2Bconfidentiality" and "B2Bintegrity" of the shipment business process should satisfy the security capabilities of each selected carrier.

Policy negotiation 1205 may be performed by a policy matcher according to the WS-Policy specification. Specifically, a WS-Policy policy is generated that reflects the high-level security intentions described in the security annotations. The carrier policies are updated in the policy registry 1206 if appropriate, in order to cope with changing security policies of invoked services at run-time.

The generated policy is then intersected with other WS-Policy policies of the selected carriers (i.e. service providers). Policy intersection is a core function of the negotiation process in WS-Policy. The intersection identifies compatible policy alternatives included in both the shipment business process and service provider security policies. Intersection is a commutative, associative function that compares multiple security policies, and returns a policy which may still need to be cleared of all invalid alternatives, as required by WS-SecurityPolicy.

A qualified security policy, which is referred to as the agreed policy, is selected from all valid or qualified alternatives. The policy matcher requests available services from the service registry and then selects the services for which a non-empty agreed policy has been produced.

With regard to the WS-SecurityPolicy specification, a non-empty policy includes a confidentiality assertion and an integrity assertion. Furthermore, the agreed policy includes a SAML token assertion, specifying the authorization requirement of a carrier service. In one example implementation, the policy matcher may be implemented using the JAVA^{®} programming language, using the Apache WS-Commons Policy.

The execution of the GET_RATE task 1207 uses web service invocations, each of which may be regulated based on a corresponding agreed policy. Before sending out a request to an external web service 1209, the security monitor retrieves corresponding patterns for each security intention included in the Service Interaction security annotation. The security monitor then executes the patterns in the order specified by the security annotation, by invoking the BEFORESERVICECALL entry point.

The pattern code transforms the actual SOAP message (which is communicated via SOAP messaging 1210) into a secure message by encrypting and signing the message in order to fulfill the security objectives represented by the security intentions. In accordance with the agreed-upon security policy, the pattern code adds also a SAML token into the request, as needed by the agreed policy. Furthermore, the security monitor sends a request to the carrier service provider in the form of a WS-Security-encoded SOAP message.

On receiving the service request, the carrier service provider performs cryptographic operations on the SOAP message, and verifies the SAML token. The policy decision point of the carrier service provider then evaluates the service request based on the token information. If the service request is positively evaluated, a rate is calculated, and the rate is included in a SOAP message. This SOAP message is encrypted and signed, and is returned to the shipment requester. After receiving the response of the invoked service provider, the security monitor executes the pattern enforcement code of the AFTERSERVICECALL entry point. This invocation results in the signature being verified, and the content being decrypted.

From the security enforcement perspective, the execution of the SELECT_CARRIER task 1214 causes an approval to be performed, based on the specified role assignment intention. The execution of the SELECT_CARRIER task 1214 also involves selection of the carrier activity in the user interface, and a persisting the selection result activity in the backend 1212. The execution of two activities thus invokes a two-phase access control protocol.

Security enforcement in the user interface assures that only carrier selection tasks are output and completed by a user acting in the role of "manager." Storing a selection result may require special permissions in the backend systems. Assuming that these permissions have already been updated as discussed above, backend policy enforcement adds a SAML assertion token to the SOAP message which is then sent to the backend system 1215. The SAML token encodes the user role "manager." Upon receiving the service request including the SOAP message and the token, the token manager of the backend system 1215 verifies the token and extracts the role information.

Finally, the BOOK_CARRIER task 1215 calls the previously selected carrier service by performing a policy enforcement in the same way as it is done for the GET_RATE task.

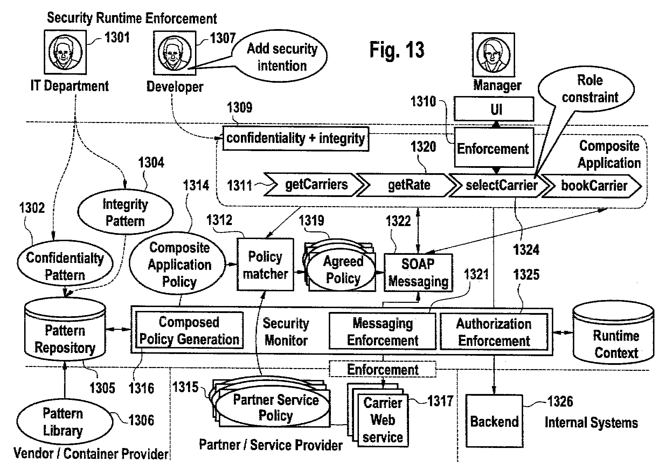

Figure 13 illustrates run-time enforcement for another exemplary business process, which includes the Service Interaction security annotation "enforce confidentiality and integrity," and the assign security annotation "assign roles [manager] to select_carrier." A product security team 1301 adds at least one confidentially pattern 1302 and at least one integrity pattern 1304 to a pattern repository 1305. Other patterns may also be added to the pattern repository 1305, such as from a vendor or container provider's pattern library 1306.

During a design-time, a business process developer 1307 adds the "enforce confidentiality and integrity" Service Interaction security annotation 1309 and the "assign roles [manager] to select_carrier" assign security annotation 1310 into the business process specification.

The GETCARRIERS task 1311 is invoked when the business process specification is executed, causing the policy matcher 1312 to retrieve the composite application policies 1314 and partner service policies 1315. The composite application policies 1314 are retrieved based on the composed policy generation 1316, and the partner service policies 1315 are retrieved based on invoking the web service provider 1317. Using an intersection function, the policy matcher 1312 outputs an agreed policy 1319, which is used during the execution of the GETRATE task 1320 for messaging enforcement 1321 with the carrier web service 1317 using SOAP messaging 1322, and during the execution of the SELECTCARRIER task 1324 for authorization enforcement 1325 with the backend 1326.

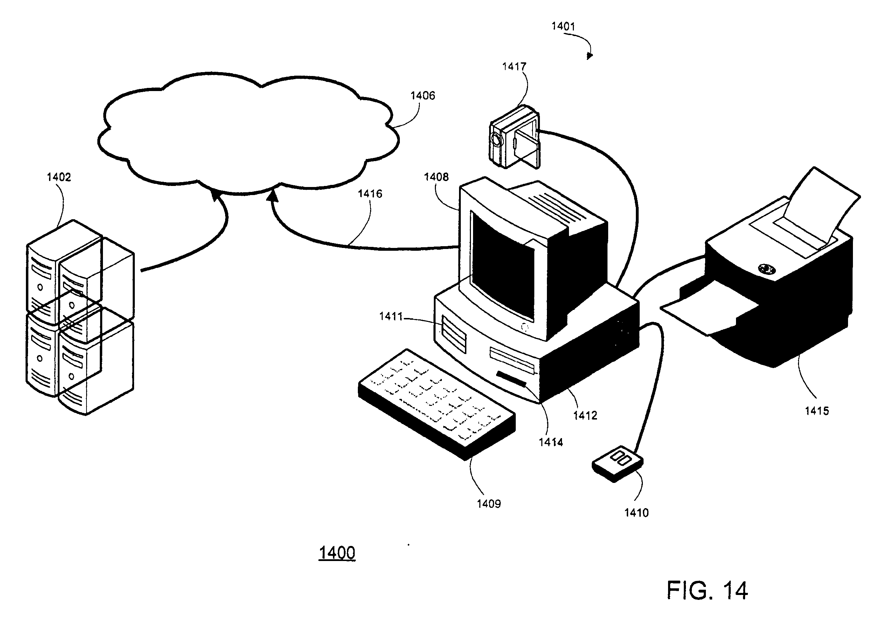

Figure 14 illustrates the exterior appearance of an exemplary system 1400 that implements the composite application, according to another general implementation. Briefly, the system 1400 includes a device 1401 that invokes a composite application and a web service provider 1402 that provides a web service. As described in further detail, below, the device 1401 includes, inter alia, a storage medium and a processor. The storage medium stores a specification for a business process, the specification including a security annotation that defines a security intention, and a task that defines at least a portion of the business process, and that calls an external service. The processor is configured to invoke a security pattern associated with the security annotation, identify a service provider associated with the external service that satisfies the security intention, based on the invoked security pattern, and invoke the business process using the identified service provider.

Alternatively, the device 1401 is configured to apply a security framework to a business process, the security framework including a definition phase identifying security objectives of a composite application, a realization phase implementing security patterns that accomplish the identified security objectives, and a declaration phase implementing the identified security objectives using security annotations within the composite application that are based on the security patterns. The enterprise is further configured to conduct an external policy negotiation to specify a common policy between the composite application and an external service based on applying the security framework, to enforce the common policy for each interaction between the composite application and the external service, and to regulate access by the external service to local services and objects based on the security objectives.

In more detail, the hardware environment of the device 1401 includes a display monitor 1408 for displaying text and images to a user, a keyboard 1409 for entering text data and user commands into the device 1401, a mouse 1410 for pointing, selecting and adjusting objects displayed on the display monitor 1408, a fixed disk drive 1411, a removable disk drive 1412, a tape drive 1414, a hardcopy output device 1415, a computer network connection 1416, and a video and audio detector 1417.

The display monitor 1408 displays graphics, images, and text that comprise the display for the software applications used by the device 1401, as well as the operating system programs necessary to operate the device 1401. A user uses the keyboard 1409 to enter commands and data to operate and control the computer operating system programs, the web browser, and/or the composite application. The user uses the mouse 1410 to select and adjust graphics and text objects displayed on the display monitor 1408 as part of the interaction with and control of the device 1401 and applications running on the device 1401. The mouse 1410 is any type of pointing device, and may be a joystick, a trackball, a touch-pad, or other pointing device.

The video and audio detector 1417 allows the device 1401 to capture digital images and/or audio, and may be a scanner, a digital camera, a digital video camera, a microphone or other digital input device. Software used to provide for the composite application platform is stored locally on computer readable memory media, such as the fixed disk drive 1411.

In a further implementation, the fixed disk drive 1411 itself may include a number of physical drive units, such as a redundant array of independent disks ("RAID"), or may be a disk drive farm or a disk array that is physically located in a separate computing unit. Such computer readable memory media allow the device 1401 to access computer-executable process steps, application programs and the like, stored on removable and non-removable memory media.

The wireless or wireline computer network connection 1416 may be a modem connection, a local-area network ("LAN") connection including the Ethernet, or a broadband wide-area network ("WAN") connection such as a digital subscriber line ("DSL"), cable high-speed internet connection, dial-up connection, T-1 line, T-3 line, fiber optic connection, or satellite connection. The network 1406 may be one or more of a LAN network, a corporate or government WAN network, the Internet, or other network.

The computer network connection 1416 uses a wireline or wireless connector. Example wireless connectors include, for example, an INFRARED DATA ASSOCIATION^{®} ("IrDA^{®}") wireless connector, an optical wireless connector, an INSTITUTE OF ELECTRICAL AND ELECTRONICS ENGINEERS^{®} ("IEEE^{®}") Standard 802.11 wireless connector, a BLUETOOTH^{®} wireless connector, a near field communications ("NFC") connector, an orthogonal frequency division multiplexing ("OFDM") ultra wide band ("UWB") wireless connector, a time-modulated ultra wide band ("TM-UWB") wireless connector, or other wireless connector. Example wireline connectors include, for example, a IEEE^{®}-1394 FIREWIRE^{®} connector, a Universal Serial Bus ("USB") connector, a serial port connector, a parallel port connector, or other wireline connector.

The removable disk drive 1412 is a removable storage device that is used to off-load data from the device 1401 or upload data onto the device 1401. The removable disk drive 1412 may be a floppy disk drive, an IOMEGA^{®} ZIP^{®} drive, a compact disk-read only memory ("CD-ROM") drive, a CD-Recordable drive ("CD-R"), a CD-Rewritable drive ("CD-RW"), flash memory, a USB flash drive, an external hard disk drive, thumb drive, pen drive, key drive, a High-Density Digital Versatile Disc ("HD-DVD") optical disc drive, a Blu-Ray optical disc drive, a Holographic Digital Data Storage ("HDDS") optical disc drive, or any one of the various recordable or rewritable digital versatile disc ("DVD") drives such as the DVD-Recordable ("DVD-R" or "DVD+R"), DVD-Rewritable ("DVD-RW" or "DVD+RW"), or DVD-RAM. Operating system programs, applications, and various data files, are stored on disks, which are stored on the fixed disk drive 1411 or on removable media for the removable disk drive 1412.

The tape drive 1414 is a tape storage device that is used to off-load data from the device 1401 or to upload data onto the device 1401. The tape drive 1414 may be a quarter-inch cartridge ("QIC"), 4 mm digital audio tape ("DAT"), 8 mm digital linear tape ("DLT") drive, or other type of tape.

The hardcopy output device 1415 provides an output function for the operating system programs and applications. The hardcopy output device 1415 may be a printer or any output device that produces tangible output objects, including textual or image data or graphical representations of textual or image data. While the hardcopy output device 1415 is depicted as being directly connected to the device 1401, it need not be.
For instance, the hardcopy output device 1415 may be connected to device 1401 via a network interface, such as a wireline or wireless network.

Furthermore, although the device 1401 is illustrated in Figure 14 as a desktop PC, in further implementations the device 1401 may be a laptop, a workstation, a midrange computer, a mainframe, an embedded system, telephone, a handheld or tablet computer, a PDA, or other type of computer.

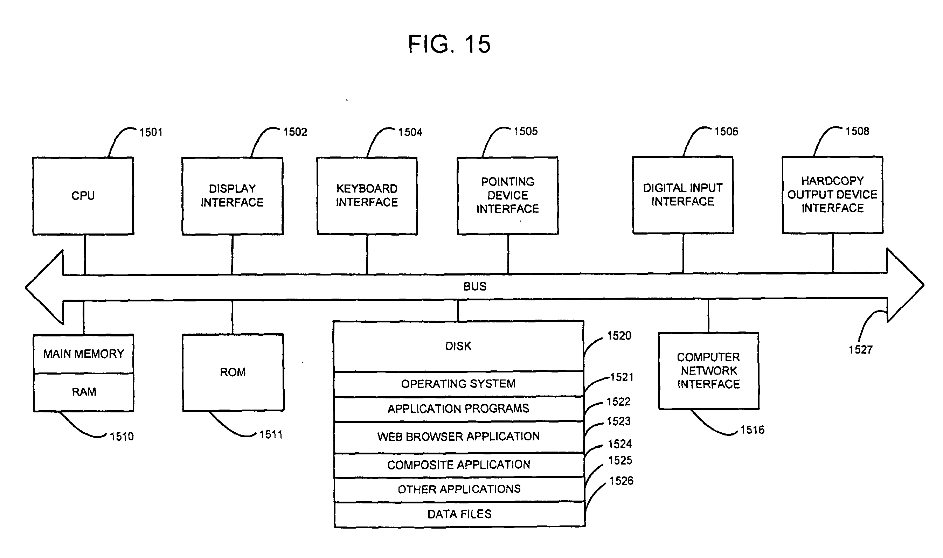

Figure 15 is a block diagram illustrating the internal architecture of one computer shown in Figure 14. The computing environment includes a computer central processing unit ("CPU") 1501 where the computer instructions that comprise an operating system or an application are processed; a display interface 1502 which provides a communication interface and processing functions for rendering graphics, images, and texts on the display monitor 1408; a keyboard interface 1504 which provides a communication interface to the keyboard 1409; a pointing device interface 1505 which provides a communication interface to the mouse 1410 or an equivalent pointing device; a digital input interface 1506 which provides a communication interface to the video and audio detector 1417; a hardcopy output device interface 1508 which provides a communication interface to the hardcopy output device 1415; a random access memory ("RAM") 1510 where computer instructions and data are stored in a volatile memory device for processing by the computer CPU 1501; a read-only memory ("ROM") 1511 where invariant low-level systems code or data for basic system functions such as basic input and output ("I/O"), startup, or reception of keystrokes from the keyboard 1409 are stored in a non-volatile memory device; a storage 1520 or other suitable type of memory (e.g. such as random-access memory ("RAM"), read-only memory ("ROM"), programmable read-only memory ("PROM"), erasable programmable read-only memory ("EPROM"), electrically erasable programmable read-only memory ("EEPROM"), magnetic disks, optical disks, floppy disks, hard disks, removable cartridges, flash drives), where the files that comprise an operating system 1521, application programs 1522 (including web browser application 1523, composite application 1524, and other applications 1525 as necessary) and data files 1526 are stored; and a computer network interface 1516 which provides a communication interface to the network 1406 over the computer network connection 1416. The constituent devices and the computer CPU 1501 communicate with each other over the computer bus 1527.

Briefly, a computer program product is tangibly embodied in disk 1520, a machine-readable storage medium. The computer program product includes instructions that, when read by a machine, operate to cause a data processing apparatus to access a specification for a business process, the specification including a security annotation that defines a security intention, and a task that defines at least a portion of the business process, and that calls an external service. The computer program product also includes instructions that operate to cause the data processing apparatus to invoke a security pattern associated with the security annotation, identify a service provider associated with the external service that satisfies the security intention, based on the invoked security pattern, and invoke the business process using the identified service provider.

Alternatively, a computer program product, tangibly embodied in disk 1520, the computer program product including instructions that, when read by a machine, operate to cause a data processing apparatus to apply a security framework to a business process, the security framework including a definition phase identifying security objectives of a composite application, a realization phase implementing security patterns that accomplish the identified security objectives, and a declaration phase implementing the identified security objectives using security annotations within the composite application that are based on the security patterns. The computer program product also includes instructions that, when read by a machine, operate to cause a data processing apparatus to conduct an external policy negotiation to specify a common policy between the composite application and an external service based on applying the security framework, to enforce the common policy for each interaction between the composite application and the external service, and to regulate access by the external service to local services and objects based on the security objectives.

The RAM 1510 interfaces with the computer bus 1527 so as to provide quick RAM storage to the computer CPU 1501 during the execution of software programs such as the operating system application programs, and device drivers. More specifically, the computer CPU 1501 loads computer-executable process steps from the fixed disk drive 1411 or other media into a field of the RAM 1510 in order to execute software programs. Data is stored in the RAM 1510, where the data is accessed by the computer CPU 1501 during execution.

Also shown in Figure 15, the device 1401 stores computer-executable code for a operating system 1521, and application programs 1522 such as word processing, spreadsheet, presentation, gaming, web browsing, JavaScript engine, or other applications. Although it is possible to provide for the composite application using the above-described implementation, it is also possible to implement the functions according to the present disclosure as a dynamic link library ("DLL"), or as a plug-in to other application programs such as an Internet web-browser such as the APPLE SAFARI web browser or the MICROSOFT INTERNET EXPLORER web browser.

The computer CPU 1501 is one of a number of high-performance computer processors, including an INTEL or AMD^{®} processor, a POWERPC^{®} processor, a MIPS^{®} reduced instruction set computer ("RISC") processor, a SPARC processor, an ACORN RISC Machine ("ARM^{®}") architecture processor, a HP ALPHASERVER^{®} processor or a proprietary computer processor for a mainframe. In an additional arrangement, the computer CPU 1501 is more than one processing unit, including a multiple CPU configuration found in high-performance workstations and servers, or a multiple scalable processing unit found in mainframes.

The operating system 1521 may be APPLE^{®} MAC OS X^{®} for INTEL^{®} and POWERPC^{®} based workstations and servers; MICROSOFT^{®} WINDOWS NT^{®}/WINDOWS^{®} 2000/WINDOWS^{®} XP Workstation; MICROSOFT^{®} WINDOWS VISTA^{®} /WINDOWS NT^{®}/WINDOWS^{®}2000/WINDOWS^{®}XP Server; a variety of UNIX^{®}-flavored operating systems, including AIX^{®} for IBM^{®} workstations and servers, SUNOS^{®} for SUN^{®} workstations and servers, LINUX^{®} for INTEL^{®} CPU-based workstations and servers, HP UX WORKLOAD MANAGER^{®} for HP^{®} workstations and servers, IRIX^{®} for SGI^{®} workstations and servers, VAX/VMS for Digital Equipment Corporation computers, OPENVMS^{®} for HP ALPHASERVER^{®} -based computers; SYMBIAN OS^{®}, NEWTON^{®}, IPOD^{®}, WINDOWS MOBILE^{®} or WINDOWS CE^{®}, PALM^{®}, NOKIA^{®} OS ("NOS"), OSE^{®}, or EPOC^{®} for mobile devices, or a proprietary operating system for computers or embedded systems. The application development platform or framework for the operating system 1521 may be: BINARY RUNTIME ENVIRONMENT FOR WIRELESS^{®} ("BREW^{®}"); Java Platform, Micro Edition ("Java ME") or Java 2 Platform, Micro Edition ("J2ME^{®}"); PYTHON^{™}, FLASH LITE^{®}, or MICROSOFT^{®} .NET Compact.

While Figures 14 and 15 illustrate one possible implementation of a computing system that executes program code, or program or process steps, configured to effectuate the invocation of the composite application, other types of computers may also be used as well.

As to formal matters, while the term "user" has been consistently used to describe an entity that interacts with these processes, such a generalization is also intended to describe multiple related or unrelated, living or automated entities or beings that interact with these processes at various different, overlapping or nonoverlapping states. In a similar vein, the term "selection" is intended to denote throughout a manual selection by a human, an automatic selection by a non-human, or some combination thereof. Finally, it is noted that, for the sake of brevity, the term "JavaScript" is intended to reference the SUN MICROSYSTEMS^{®} JAVASCRIPT^{®} programming language, and the term "XML" is intended to reference 'eXtensible Markup Language' throughout.

The enhanced framework described above follows a business-driven application security approach, according to which security requirements of a business application are expressed as security annotations at the business process specification level and the required security infrastructure for meeting the expressed security requirements can be generated automatically.

Specifically, this framework provides a pattern based annotation of security policies at the composite process level by using an intuitive domain specific security language, causes automatic mediation between composite application and service providers by performing a matchmaking between security policies and security capabilities, and automatically generates protected secure service proxies which manage the secure communication between composite application and service providers.

Thus, the scripting framework for composite application provides an integrated modeling environment and scripting language that make it easier for a more business oriented developer to build new applications from existing or new building blocks or services. This framework follows a model-based scripting approach, which supports the complete specification of composite applications in the form of one integrated model. Parts of this model describe the overall data model, orchestration of service calls, event management, user interface etc. as internal domain specific languages.

Thus end-to-end development of composite applications is supported by providing a family of domain specific languages. As such all associated logic and configurations to support the composite application may be defined and deployed by one business process developer, using as few as one toolset, in as seamless a fashion as is possible. In turn, the business process developer is provided with a development and execution environment for which different tools and abstractions that are often used during the different software development phases do not need to be used.

A number of implementations have been described. Nevertheless, it will be understood that various modifications may be made without departing from the spirit and scope of the disclosure. Accordingly, other implementations are within the scope of the following claims.

## Claims

1. A computer-implemented method comprising:
accessing a specification for a business process, the specification including:
a security annotation that defines a security intention, and
a task that defines at least a portion of the business process, and that calls an external service;
invoking a security pattern associated with the security annotation;
identifying a service provider associated with the external service that satisfies the security intention, based on the invoked security pattern; and
invoking the business process using the identified service provider.

2. The method according to claim 1, wherein the security annotation is expressed using a policy domain-specific language.

3. The method according to claim 1 or 2, further comprising parsing the security annotation.

4. The method according to any one of claims 1 to 3, further comprising updating a security policy database based on the security annotation.

5. The method according to any one of the preceding claims, wherein identifying a service provider further comprises:
accessing service access information for a list of service providers, the service access information including a service end point and service operation signatures;
accessing a stored security objective and a stored security capability for each of the service providers in the list of service providers;
comparing the stored security objectives and the stored security capability for each of the service providers to a security objective and a security capability associated with the security intention;
selecting a selected service provider based on comparing the stored security objective and the stored security capability for each of the service providers;
storing the selected service provider in a knowledge base as the identified service provider; and
generating an event indicating that a service provider selection process has been completed based on storing the selected service provider.

6. The method according to any one of the preceding claims, wherein invoking the business process using the identified service provider further comprises:
generating a secure service proxy for the identified service provider based on the security intention, the secure service proxy managing a secure service calls operation to the external service; and
calling the external service using the secure service proxy.

7. The method according to claim 6, further comprising:
encrypting the secure service proxy; and
storing the encrypted secure service proxy.

8. The method according to claim 7, further comprising:
retrieving the stored secure service proxy;
invoking the secure service call operation associated with the secure service proxy;
receiving a response from the external service; and
processing the response using the secure service proxy.

9. The method according to any one of the preceding claims, wherein the service is a back-end enterprise service, an external business-to-business service, or a local service.

10. The method according to any one of the preceding claims, wherein the security annotation includes a variable representing the security intention, and wherein the security pattern is invoked using the variable.

11. The method according to any one of the preceding claims, wherein the security intention declares an external enforcement policy when using an external web service, declares policies when exposing the invoked business process as a web service, declares a task-based authorization requirement when the task requires a human interaction, and declares task-based authorization constraints which specify an order in which the task is executed.

12. The method according to any one of the preceding claims, wherein the security intention specifies roles that are allowed to execute the task.

13. The method according to any one of the preceding claims, wherein the security intention specifies an order in which the task is executed.

14. The method according to any one of the preceding claims, wherein invoking the business process further comprises executing the task.

15. The method according to claim 14, wherein the security pattern comprises:
a first entry point used to trigger enforcement of the security intention before the service provider is identified,
a second entry point used to trigger enforcement of the security intention before the task is executed, and
a third entry point used to trigger enforcement of the security intention after the task is executed.

16. The method according to claim 15, wherein invoking the business process further comprises:
selecting the first entry point if the service provider has not yet been identified;
selecting the second entry point if the task has not yet been executed; and
selecting the third entry point if the task has been executed.

17. The method according to any one of the preceding claims, wherein identifying the service provider further comprises:
generating a service request; and
security enhancing the service request based on the security pattern.

18. The method according to any one of the preceding claims, wherein the security intention defines a message confidentiality, encryption security intention, integrity intention, role assignment intention, or task execution order intention.

19. A computer program product, tangibly embodied in a machine-readable medium, the computer program product comprising instructions that, when read by a machine, operate to cause a data processing apparatus to:
access a specification for a business process, the specification including:
a security annotation that defines a security intention, and
a task that defines at least a portion of the business process, and that calls an external service;
invoke a security pattern associated with the security annotation;
identify a service provider associated with the external service that satisfies the security intention, based on the invoked security pattern; and
invoke the business process using the identified service provider.

20. A device comprising:
a storage medium storing a specification for a business process, the specification including:
a security annotation that defines a security intention, and
a task that defines at least a portion of the business process, and that calls an external service; and
a processor configured to:
invoke a security pattern associated with the security annotation,
identify a service provider associated with the external service that satisfies the security intention, based on the invoked security pattern, and
invoke the business process using the identified service provider.
